**Europäisches Patentamt**

**European Patent Office**

**Office européen des brevets**

(19)

(11) Veröffentlichungsnummer : **0 461 468 B1**

(12)

# EUROPÄISCHE PATENTSCHRIFT

(45) Veröffentlichungstag der Patentschrift :
03.08.94 Patentblatt 94/31

(51) Int. Cl.$^5$ : **C03C 3/087, C03C 8/24**

(21) Anmeldenummer : **91108739.3**

(22) Anmeldetag : **28.05.91**

(54) **Bleioxidfreies Glas für elektrische Geräte.**

(30) Priorität : **11.06.90 DE 4018682**

(43) Veröffentlichungstag der Anmeldung :
**18.12.91 Patentblatt 91/51**

(45) Bekanntmachung des Hinweises auf die
Patenterteilung :
**03.08.94 Patentblatt 94/31**

(84) Benannte Vertragsstaaten :
**AT CH DE ES FR GB IT LI SE**

(56) Entgegenhaltungen :
**DE-B- 1 696 110
CHEMICAL ABSTRACTS, vol. 111, no. 16, 16.
Oktober 1989, Columbus, Ohio, US;abstract
no. 139426X, Seite 327 ;
CHEMICAL ABSTRACTS, vol. 95, no. 5, September 1981, Columbus, Ohio, US;abstract no.
85052C, Seite 252 ;
CHEMICAL ABSTRACTS, vol. 83, no. 20, 17.
November 1975, Columbus, Ohio, US;
abstract no. 167943K, Seite 237 ;**

(73) Patentinhaber : **Patent-Treuhand-Gesellschaft
für elektrische Glühlampen mbH
Hellabrunner Strasse 1
D-81543 München (DE)**

(72) Erfinder : **Weiss, Werner, Dr.
Ulmenweg 26
W-8901 Stadtbergen (DE)**
Erfinder : **Mair, Manfred
Kastanienweg 39a
W-8900 Augsburg (DE)**
Erfinder : **Deisenhofer, Manfred
Staatstrasse 16
W-8901 Altenmünster (DE)**
Erfinder : **Pösl, Ewald
Zugspitzstrasse 3
W-8901 Kissing (DE)**

## Beschreibung

Die Erfindung geht aus von einem Glas gemäß dem Oberbegriff des Anspruchs 1.

Derartige Gläser werden in der Elektro- und Vakuumtechnik eingesetzt, z.B. bei elektrischen Lampen.

Eine häufige Anwendung ist die Verarbeitung zu Formkörpern, die aus Glaspulver gepreßt und anschließend gesintert werden. Diese Formkörper dienen dann als Dichtungsteile für Stromzuführungen, wobei es besonders auf mechanische, vakuumtechnische und elektrische Stabilität ankommt.

Hierzu werden bisher sowohl Weich- als auch Hartgläser verwendet, je nach den Verarbeitungsanforderungen, der Art der einzuschmelzenden Metallteile und der geforderten Höhe des elektrischen Isolationswiderstands.

Hochisolierende Gläser sind beispielsweise Hartgläser vom Pyrex-Typ mit Ausdehnungskoeffizienten um $4 \times 10^{-6}$ /K, die nur sehr wenig Bleioxid enthalten. Eine andere Möglichkeit sind Weichgläser mit Ausdehnungskoeffizienten um $9 - 10 \times 10^{-6}$ /K, die normalerweise bis zu 40 % Bleioxid enthalten.

Aus der US-PS 4 089 694 ist ein bleioxidarmes Weichglas für elektrische Geräte bekannt, das folgende Zusammensetzung (in Gew.-%) aufweist: 65-75 % $SiO_2$, 9-13 % $Na_2O$, 3-6 % $K_2O$, 1-4 % $Al_2O_3$, 4-8 % CaO, 0-4 % BaO, 0-6 % PbO, 0-2 % $Li_2O$ und 0-1 % $F^-$. Wesentliches Merkmal dieses Glases ist die sorgfältige Wahl des Verhältnisses zwischen $Na_2O$ und $K_2O$, das von der verwendeten CaO-Menge abhängt. Das CaO wirkt bei diesem Glas als teilweiser PbO-Ersatz. Die Gründe für einen möglichst vollständigen Ersatz sind in dieser Schrift ausführlich dargelegt. Insbesondere ist ein hoher Anteil an Bleioxid gesundheitlich bedenklich.

Nachteilig an dem bekannten bleioxidarmen Glas ist der für viele Anwendungszwecke zu geringe elektrische Widerstand, der bei 250 °C typisch $10^7$ bis $10^{8.5} \Omega$cm beträgt. Insbesondere bei der Verwendung als Formkörper haben derartige Gläser die unangenehme Eigenschaft, beim Pressen des Glaspulvers die Preßformen stark abzuschleifen, so daß diese häufig nachgearbeitet bzw. erneuert werden müssen. Eine Lösung für dieses Problem - ohne dabei den Bleioxidgehalt wieder zu erhöhen - wurde bisher nicht gefunden.

Aufgabe der vorliegenden Erfindung ist es, ein grundsätzlich bleioxidfreies Glas zu schaffen, das bei möglichst niedriger Temperatur auf schnellaufenden Maschinen gut verarbeitbar ist. Insbesondere soll das bleioxidfreie Glas einen sehr hohen elektrischen Widerstand besitzen.

Diese Aufgabe wird durch die Zusammensetzung gemäß Anspruch 1 gelöst.

Besonders vorteilhafte Ausgestaltungen und Anwendungen der Erfindung finden sich in den Unteransprüchen.

Die erfindungsgemäße Glaszusammensetzung verwendet im Vergleich zum Stand der Technik einen wesentlich niedrigeren $SiO_2$-Gehalt (40-60 Gew.-%) und verzichtet vollständig auf $Na_2O$. Außer geringen Anteilen an den Oxiden von Aluminium und Calcium werden hohe Mengen an BaO (20-30 Gew.-%) und $K_2O$ (5-7 Gew.-%) zusammen mit einem merklichen Anteil an $V_2O_5$ (2-5 Gew.-%) eingesetzt. Besonders vorteilhaft ist ein gemeinsamer Anteil von BaO und $V_2O_5$, der zwischen 25 und 35 Gew.-% liegt. Zwar ist auch Vanadiumoxid als toxischer Stoff bekannt, aber sein Dampfdruck liegt um 1-2 Größenordnungen unter dem des Bleioxids, so daß die Arbeitsplatzkonzentrationen wesentlich geringer ausfallen und mindestens eine Zehnerpotenz unter den zulässigen Grenzen liegen. Besonders gute Eigenschaften zeigt ein Glas, bei dem die Oxide der Erdalkalimetalle - Ba, Ca und evtl. bis zu 5 Gew.-% Mg - gewichtsmäßig den Vanadiumoxidanteil um das 8- bis 12fache übertreffen. Der Kaliumoxidanteil von 5-7 Gew.-% dient zur Einstellung der thermischen Ausdehnungskoeffizienten. Der Anteil von CaO und MgO zusammen liegt vorteilhaft zwischen 5 und 15 Gew.-%. Des weiteren kann das erfindungsgemäße Glas eine geringe Beimengung an Boroxid (bis zu 5 Gew.-%) enthalten zur Feinregulierung der Viskosität.

Die physikalischen Eigenschaften dieses Glases sind äußerst vorteilhaft, ohne daß Nachteile bei anderen Eigenschaften in Kauf genommen werden mußten. Das zeigt sich insbesondere bei der Anwendung dieses Glases bei Sinterkörpern, die als Verbindungselement zwischen zwei Stromzuführungen eingesetzt werden. Sie werden aus Glaspulver gepreßt. Besonders überraschend in diesem Zusammenhang ist, daß das erfindungsgemäße Glas eine verbesserte Schleifhärte aufweist. Denn statt der dazu naheliegenden Maßnahme, den Bleioxidgehalt zu erhöhen, beschreitet die Erfindung gerade den entgegengesetzten Weg, indem der Bleioxidgehalt noch weiter abgesenkt wird. Das erfindungsgemäße Glas zeichnet sich nämlich durch eine ähnlich geringe Schleifhärte wie die bekannten Bleikristallgläser aus, die einen typischen Bleioxidgehalt von ca. 20-40 % aufweisen. Bei den bekannten bleioxidarmen Pyrexgläsern ist dagegen die Schleifhärte um das 2- bis 3fache höher, so daß die Preßwerkzeuge dort erheblich stärker mechanisch abgenutzt werden.

Wesentlich für diese geringe Schleifhärte ist der sehr niedrige $SiO_2$- und $B_2O_3$-Anteil in Kombination mit dem relativ hohen $K_2O$- und BaO-Anteil. Überraschenderweise hat sich gezeigt, daß ein merklicher Zusatz von $V_2O_5$ (im Austausch gegen $SiO_2$) die Schleifhärte ebenfalls günstig beeinflußt, ohne den elektrischen Widerstand nachteilig zu verändern.

Vorteilhaft ist folgende Zusammensetzung:

$$
\begin{array}{lll}
SiO_2 & 48 \ - \ 52 & \text{Gew.-\%} \\
Al_2O_3 & 3 \ - \ 4 & " \\
MgO & 3 \ - \ 4 & " \\
CaO & 5 \ - \ 6 & " \\
BaO & 26 \ - \ 28 & " \\
V_2O_5 & 3,5 \ - \ 4,5 & " \\
K_2O & 6 \ - \ 7 & "
\end{array}
$$

Ein weiterer Vorteil ist die gute Verarbeitbarkeit in einem eng begrenzten Temperaturbereich. Die niedrigste Temperatur ist durch die Verdampfungsgeschwindigkeit des zum Verpressen erforderlichen Binders gegeben: Dieser muß vor Erreichen der Sintertemperatur vollständig aus dem Preßling entfernt sein. Die höchst zulässige Sintertemperatur wird von der Temperatur der Weiterverarbeitung des Sinterlings und von der Beschaffenheit des Sinterofens mit seinen in allgemeinen kontinuierlich hindurchlaufenden Auflage-Bändern bestimmt, auf denen die Sinterkörper nicht kleben dürfen. Die Temperatur der Weiterverarbeitung richtet sich vor allem nach dem Material, das in den Sinterkörper eingeschmolzen wird.

Das bleioxidfreie Glas zeichnet sich weiterhin durch einen extrem hohen elektrischen Widerstand (bei 250 °C etwa $10^{12}\Omega$cm) aus, der sonst nur von alkaliarmen, bleioxidhaltigen Hartgläsern erreicht wird.

Eine besonders herausragende Eigenschaft des erfindungsgemäßen Glases ist ferner sein sehr niedriger Temperaturkoeffizient des elektrischen Widerstands, der um 50 % unter dem von bleioxidhaltigen Gläsern liegt. Wegen der besonders starken Widerstandsabnahme bei höheren Temperaturen (> 600 °C) sind auch "weiche" Bleigläser mit im festen Zustand sehr guter Isolation nicht in der Lage, im schmelzflüssigen Zustand ausreichend elektrisch zu isolieren. Sinterperlen aus Bleikristallgläsern mit mehr als 24 Gew.-% Bleioxid zeigen z.B. bei $10^6\Omega$ einen Widerstandsabfall um etwa 3 % pro Kelvin Temperaturerhöhung, während erfindungsgemäße Gläser einen Widerstandsabfall zeigen, der lediglich bei etwa 1,5 - 2 % pro Kelvin Temperaturerhöhung liegt. Der Widerstandsabfall wurde im flüssigen Zustand bei einer Temperatur von 1000 °C gemessen. Die Viskosität bei 150$\Omega$cm beträgt $10^3$ d Pas.

Die Herstellung des bleioxidfreien Glases erfolgt durch Einschmelzen in Häfen bei 1400-1450 °C. Die Glasschmelze ist gieß- und frittierfähig. Zweckmäßig ist der Einsatz basischer Häfen, die durch die stark basische Schmelze weniger stark angegriffen werden als saure Häfen. Zum Einstellen der Viskosität kann Borsäure verwendet werden. Sie ändert im Austausch zu $SiO_2$ weder die Schleifhärte noch den Widerstand noch die thermische Ausdehnung des Glases.

Ein Ausführungsbeispiel der Erfindung soll im folgenden näher erläutert werden.

Besonders bewährt hat sich eine Glaszusammensetzung, die aus 7 Rohstoffen hergestellt wird:

$$
\begin{array}{lll}
SiO_2 & 50,2 & \text{Gew.-\%} \\
Al_2O_3 & 3,4 & " \\
MgO & 3,6 & " \\
CaO & 5,3 & " \\
BaO & 26,7 & " \\
V_2O_5 & 4,0 & " \\
K_2O & 6,8 & "
\end{array}
$$

Sie besitzt folgende Eigenschaften:

$$\text{Ausdehnungskoeffizient} \quad 9 \times 10^{-6}/K \quad (\pm\, 0,2 \times 10^{-6})$$

$$\text{Transformationstemperatur} \quad 620\ °C \quad (\pm\, 10\ °C)$$

$$\text{Erweichungstemperatur} \quad 820\ °C \quad (\pm\, 10\ °C)$$

$$\text{Verarbeitungstemperatur} \quad 1075\ °C \quad (\pm\, 15\ °C)$$

$$\text{Dichte} \quad 3,0\ g/cm^3 \quad (\pm\, 0,1\ g/cm^3)$$

Widerstandstemperaturen ($\pm$ 10 °C) für

$10^{12}\Omega cm$: 250 °C

$10^{8}\Omega cm$: 480 °C

$10^{4}\Omega cm$: 900 °C

$10^{3}\Omega cm$: 1036 °C

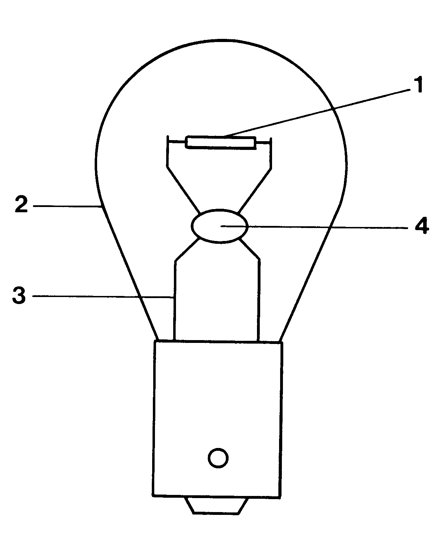

Die Anwendung sei am Beispiel einer Bremslichtglühlampe (Fig. 1) erläutert. Der Leuchtkörper 1 aus Wolfram wird im Kolben 2 durch zwei Stromzuführungen 3 gehalten, die aus einer Eisen-Nickel-Legierung bestehen. Das Verbindungselement 4, das die beiden Stromzuführungen mechanisch und elektrisch stabil arretiert, ist eine Glasperle (oder auch ein Glasring) aus Sinterglas. Diese weist die obige Glaszusammensetzung auf. Der besondere Vorteil dieser Glaszusammensetzung ist, daß ihr thermischer Ausdehnungskoeffizient in idealer Weise dem der Stromzuführungen angepaßt ist, so daß sich auch vakuumdichte Verbindungselemente, in die elektrisch-leitende Teile eingeschmolzen sind, herstellen lassen. Diese Eigenschaft läßt sich auch mit anderen erfindungsgemäßen Glaszusammensetzungen in bezug auf andere Metalle oder Legierungen erzielen.

Weitere Einsatzgebiete sind insbesondere Miniaturglühlampen und Leuchtstofflampen, die an Netzspannung arbeiten.

## Patentansprüche

1. Bleioxidfreies Glas für elektrische Geräte, gekennzeichnet durch folgende Zusammensetzung (Angaben in Gew.-%)

   $SiO_2$      40 - 60 %

   $Al_2O_3$      2 - 5 %

   $CaO$      5 - 10 %

   $BaO$      20 - 30 %

   $V_2O_5$      2 - 5 %

   $K_2O$      5 - 7 %.

2. Glas nach Anspruch 1, dadurch gekennzeichnet, daß der Anteil von $BaO$ und $V_2O_5$ zusammen zwischen 25 und 35 Gew.-% liegt.

3. Glas nach Anspruch 1, dadurch gekennzeichnet, daß zusätzlich bis zu 5 Gew.-% $MgO$ enthalten sind.

4. Glas nach Anspruch 3, dadurch gekennzeichnet, daß der Anteil von $CaO$ und $MgO$ zusammen zwischen 5 und 15 Gew.-% liegt.

5. Glas nach einem der vorhergehenden Ansprüche, dadurch gekennzeichnet, daß das Verhältnis zwischen den Anteilen von $CaO$, $BaO$ und evtl. $MgO$ einerseits und dem Anteil von $V_2O_5$ andererseits bei 8-12 liegt.

6. Glas nach Anspruch 1, dadurch abgewandelt, daß der $SiO_2$-Anteil durch bis zu 5 Gew.-% $B_2O_3$ bezogen auf die Gesamtmischung ersetzt ist.

7. Glas nach Anspruch 3, gekennzeichnet durch folgende Zusammensetzung

   $SiO_2$      48 - 52 %

   $Al_2O_3$      3 - 4 %

   $MgO$      3 - 4 %

   $CaO$      5 - 6 %

   $BaO$      26 - 28 %

$V_2O_5$      3,5 - 4,5 %
$K_2O$      6 - 7 %

8. Glas nach Anspruch 1, dadurch gekennzeichnet, daß es für Formkörper in elektrischen Geräten verwendet wird.

9. Glas nach Anspruch 8, dadurch gekennzeichnet, daß es als elektrisch-isolierendes Verbindungselement zwischen elektrisch-leitenden Teilen verwendet wird.

## Claims

1. Lead-oxide-free glass for electrical devices, characterized by the following composition (figures in % by weight):
   $SiO_2$      40 - 60 %
   $Al_2O_3$      2 - 5 %
   CaO      5 - 10 %
   BaO      20 - 30 %
   $V_2O_5$      2 - 5 %
   $K_2O$      5 - 7 %

2. Glass according to Claim 1, characterized in that the proportion of BaO and $V_2O_5$ taken together is between 25 and 35 % by weight.

3. Glass according to Claim 1, characterized in that it contains, in addition, up to 5 % by weight of MgO.

4. Glass according to Claim 3, characterized in that the proportion of CaO and MgO taken together is between 5 and 15 % by weight.

5. Glass according to one of the preceding claims, characterized in that the ratio between the proportions of CaO, BaO and, optionally, MgO, on the one hand, and the proportion of $V_2O_5$, on the other hand, is 8 - 12.

6. Glass according to Claim 1, modified in that the $SiO_2$ component is replaced by up to 5 % by weight of $B_2O_3$, based on the total mixture.

7. Glass according to Claim 3, characterized by the following composition:
   $SiO_2$      48 - 52 %
   $Al_2O_3$      3 - 4 %
   MgO      3 - 4 %
   CaO      5 - 6 %
   BaO      26 - 28 %
   $V_2O_5$      3.5 - 4.5 %
   $K_2O$      6 - 7 %

8. Glass according to Claim 1, characterized in that it is used for shaped bodies in electrical devices.

9. Glass according to Claim 8, characterized in that it is used as electrically insulating connecting element between electrically conducting parts.

## Revendications

1. Verre exempt d'oxyde de plomb pour des appareils électriques, caractérisé par la composition suivante (les indications sont en % en poids)
   $SiO_2$      40 à 60 %
   $Al_2O_3$      2 à 5 %
   CaO      5 à 10 %
   BaO      20 à 30 %

$V_2O_5$        2 à 5 %
$K_2O$        5 à 7 %.

2. Verre suivant la revendication 1, caractérisé en ce que la proportion de l'ensemble de BaO et de $V_2O_5$ est comprise entre 25 et 35 % en poids.

3. Verre suivant la revendication 1, caractérisé en ce qu'il contient en outre jusqu'à 5 % en poids de MgO.

4. Verre suivant la revendication 3, caractérisé en ce que la proportion de l'ensemble de CaO et de MgO est comprise entre 5 et 15 % en poids.

5. Verre suivant l'une des revendications précédentes, caractérisé en ce que le rapport entre les proportions de CaO, BaO et éventuellement MgO d'une part, et la proportion de $V_2O_5$ d'autre part, est compris entre 8 et 12.

6. Verre suivant la revendication 1, modifié en ce que la proportion de $SiO_2$ est remplacée par jusqu'à 5 % en poids de $B_2O_3$ rapporté au mélange total.

7. Verre suivant la revendication 3, caractérisé par la composition suivante
$SiO_2$        48 à 52 %
$Al_2O_3$        3 à 4 %
MgO        3 à 4 %
CaO        5 à 6 %
BaO        26 à 28 %
$V_2O_5$        3,5 à 4,5 %
$K_2O$        6 à 7 %

8. Verre suivant la revendication 1, caractérisé en ce qu'il est utilisé pour des pièces conformées dans des appareils électriques.

9. Verre suivant la revendication 8, caractérisé en ce qu'il est utilisé comme élément de liaison électriquement isolant entre des parties conductrices de l'électricité.